# EUROPÄISCHE PATENTSCHRIFT

(11) **EP 3 421 859 B1**
(45) Veröffentlichungstag und Bekanntmachung des Hinweises auf die Patenterteilung: **03.03.2021**
(21) Anmeldenummer: 18179934.7
(22) Anmeldetag: 26.06.2018
(51) Int. Cl.: F16L 57/06, B65G 53/52, B65G 53/66, G01N 3/56

(54) **FESTSTOFFFÖRDERKOMPONENTE MIT VERSCHLEISSANZEIGE**
SOLID FEED COMPONENT WITH WEAR INDICATOR
COMPOSANT DE TRANSPORT DE MATIÈRE SOLIDE À AFFICHAGE D'USURE

(30) Priorität: 30.06.2017 DE 102017114655
(43) Veröffentlichungstag der Anmeldung: 02.01.2019
(73) Patentinhaber: Esser -Werke GmbH & Co. KG, 59581 Warstein (DE)
(72) Erfinder: Spanke, Peter, 59581 Warstein (DE)
(74) Vertreter: Osterhoff, Utz

(56) Entgegenhaltungen:
- WO-A1-00/70326
- AU-A4- 2010 100 667
- GB-A- 2 254 465
- US-A1- 2005 067 834

## Beschreibung

Die vorliegende Erfindung betrifft eine Feststoffförderkomponente gemäß den Merkmalen im Oberbegriff von Patentanspruch 1.

Bei der fluidischen Förderung von Feststoffen, insbesondere bei der Förderung von Beton, unterliegen die inneren Oberflächen der Rohrleitungen einem starken Verschleiß aufgrund der abrasiven Wirkung der Feststoffe. Der Verschleißwiderstand kann durch die Verwendung von zweilagigen Rohrleitungen erhöht werden, wobei jeweils ein Mantelrohr aus einem schweißbaren Stahl und ein dem gegenüber verschleißfesteres Innenrohr ausgebildet sind. Insbesondere die Enden solcher Feststoffförderkomponenten unterliegen einem erhöhten Verschleiß. Im Bereich der Übergänge treten Turbulenzen in der an der Mantelfläche anliegenden Strömung auf, so dass hier ein erhöhter abrasiver Verschleiß zu verzeichnen ist. In der Folge werden Rohrbunde auf die Feststoffförderkomponente aufgesetzt, in denen Verschleißringe eingesetzt werden.

Grundlegend tritt jedoch immer noch ein von innen nach außen fortschreitender Verschleiß über die Mantelfläche an sowohl Rohrbundübergängen oder auch im Rohrkörper selber auf.

Um einen fortschreitenden Verschleiß, bis zu dem Erreichen eines kritischen Verschleißzustandes feststellen zu können, gibt es bisher aus dem Stand der Technik verschiedene Lösungsansätze, die mitunter einer aufwendigen Technik bedürfen und/oder nur punktuell Rückschluss auf den in dem Rohr aufgetretenen Verschleiß zulassen. Aus der DE 198 21 637 A1, aus der DE 10 2005 051 767 A1 oder auch der DE 10 2012 108 617 A1 sind verschiedene Möglichkeiten bekannt, Verschleißanzeigen im Rohrkörper und/oder im Rohrbund einer Feststoffförderkomponente auszubilden. Hierbei handelt es sich maßgeblich um mechanische Verschleißanzeigen.

Im Zweifel muss zumindest immer das Rohrleitungssystem teilweise demontiert werden, um den fortschreitenden Verschleiß in Augenschein zu nehmen und bewerten zu können.

Aus der WO 00/70326 A1 sowie der AU 2010 100 667 A1 ist bei einem Förderrohr eine Verschleißmessung mit einem umlaufenden Draht bekannt. Hierbei wird der elektrische Leiter in ein innenliegendes Kunststoffrohr eingegossen.

Aufgabe der vorliegenden Erfindung ist es daher, eine Verschleißanzeige für eine Feststoffförderkomponente aufzuzeigen, die konstruktiv einfach herstellbar ist und nicht nur eine punktuelle, sondern eine möglichst radial umlaufende Feststellung über den Verschleißzustand geben kann.

Die zuvor genannte Aufgabe wird erfindungsgemäß mit einer Feststoffförderkomponente mit den Merkmalen im Patentanspruch 1 gelöst.

Vorteilhafte Ausführungsvarianten sind Gegenstand der abhängigen Ansprüche.

Die Feststoffförderkomponente weist eine Rohrkomponente und einen damit gekoppelten Rohrbund auf. Ferner weist die Feststoffförderkomponente eine Verschleißanzeige auf. Die Verschleißanzeige ist erfindungsgemäß dadurch ausgebildet, dass in dem Rohrbund und/oder in der Rohrkomponente ein radial zumindest teilweise umlaufender elektrischer Leiter angeordnet ist. Bei fortschreitendem abrasiven Verschleiß der Feststoffförderkomponente wird der elektrische Leiter beschädigt, insbesondere durchtrennt. Dadurch kann ein Signal ausgegeben werden, dass ein kritischer Verschleißzustand erreicht ist und somit die Feststoffförderkomponente auszutauschen ist.

Unter einer Feststoffförderkomponente ist im Sinne der Erfindung sowohl ein Feststoffförderrohr zu verstehen, aber auch ein Rohrbogen oder eine Rohrmuffe. Die Rohrkomponente der Feststoffförderkomponente weist immer einen an zumindest einem Ende, insbesondere stirnseitigen Ende, gekoppelten Rohrbund auf. Erfindungsgemäß ist der elektrische Leiter in der Wandung der Rohrkomponente und/oder des Rohrbundes untergebracht. Hierzu ist in der Wandung eine Nut ausgebildet, wobei der elektrische Leiter dann in der Nut angeordnet ist. Der elektrische Leiter ist zunächst von einer Innenmantelfläche beabstandet angeordnet. Durch fortlaufenden abrasiven Verschleiß wird der elektrische Leiter freigelegt und verschleißt ebenfalls.

Die Rohrkomponente selbst und/oder auch der Rohrbund sind zweilagig ausgebildet. Hierbei kann dann in einer Außenmantelfläche der jeweils inneren Lage und bei einem Rohrbund in einer Außenmantelfläche des Innenrings der elektrische Leiter angeordnet werden. Von einer Innenmantelfläche her beginnt der abrasive Verschleiß, bis ein Nutgrund freigelegt ist und dann der elektrische Leiter ebenfalls beginnt zu verschleißen.

Die Feststoffförderkomponente weist einen zweilagigen Rohrbund mit einem Innenring und einem Außenring auf. Ferner weist die Feststoffförderkomponente bevorzugt einen Rohrkörper auf. Dieser Rohrkörper ist als zweilagiger Rohrkörper ausgebildet. Mithin weist dieser ein Innenrohr und ein Außenrohr auf.

Erfindungsgemäß ist die Verschleißanzeige derart ausgebildet, dass in dem Innenring, alternativ oder ergänzend auch in dem Innenrohr ein zumindest abschnittsweise beziehungsweise teilweise radial umlaufender elektrischer Leiter angeordnet ist. Bei fortschreitendem abrasivem Verschleiß, in Radialrichtung von innen nach außen, wird somit am Innenring und/oder am Innenrohr zunehmend mehr Material abgetragen. Die in dem Innenring beziehungsweise Innenrohr zumindest radial abschnittsweise umlaufende elektrische Leiter wird bei fortschreitendem Verschleiß freigelegt und unterliegt ebenfalls einem abrasiven Verschleiß. Der Leiter wird dadurch beschädigt und besonders bevorzugt durchtrennt.

Es wäre nunmehr möglich, dass bereits das Freilegen des elektrischen Leiters einen Kontakt auslöst. Beispielsweise kann der elektrische Leiter als Koaxialleiter aufgebaut sein und einen elektrischen Leiter mit einer diesen ummantelnden Isolierung besitzen. Der elektrische Leiter wird somit freigelegt und verschleißt ebenfalls. Zunächst wird die Isolierung verschlissen, beziehungsweise abgetragen. Der elektrische Leiter kommt in Kontakt mit dem zu fördernden Medium. Hierdurch kann beispielsweise ein Massekontakt geschaltet werden und ein entsprechendes Signal erzeugt werden.

Das Signal kann entweder an eine dauerhafte Kontrolleinrichtung angeschlossen sein. Auch kann ein externes Prüfgerät in vorgegebenen Zeitintervallen angesetzt werden.

In dem Falle, dass der zu fördernde Feststoff wenig Fluidanteile besitzt und/oder nicht elektrisch leitend ist, kann weiterhin vorgesehen sein, dass der elektrische Leiter teilweise, insbesondere vollständig durchtrennt wird um ein Signal auszulösen.

Mit einem fortlaufenden Verschleiß des elektrischen Leiters steigt dessen elektrischer Widerstand, so dass bereits dadurch ein Signal ausgelöst werden kann. Auch kann ein elektrisches Signal erzeugt werden, wenn der elektrische Leiter vollständig verschlissen beziehungsweise durchtrennt ist. Beispielsweise kann bei intaktem elektrischem Leiter eine grüne Kontrolllampe leuchten, als Zeichen für "Verschleißzustand ist ok". Ist der elektrische Leiter vollständig durchtrennt, springt diese grüne Signaleinrichtung auf ein rotes Signal um, als Zeichen dafür, dass ein kritischer Verschleißzustand erreicht ist. Ein Prüfstrom, der in diesem Fall durch die elektrische Leitung geleitet wird, wird bei Durchtrennen nicht mehr geleitet. Somit kann das Erreichen des Verschleißzustandes angezeigt werden.

Der besondere Vorteil ist, dass radial zumindest abschnittsweise insbesondere vollständig umlaufend die Feststoffförderkomponente überwacht wird. Somit werden nicht nur einzelne Punkte auf abrasiven Verschleiß hin überwacht, sondern der Verschleißfortschritt der Feststoffförderkomponente wird radial von größer 0 bis zu 360 Grad umlaufend überwacht. Insbesondere kann je nach Einbaulage beispielsweise aufgrund der Erdanziehungskraft in einem eher untenliegenden Bereich ein höherer Verschleiß auftreten, als auf einen in Radialrichtung bezogenen oberen Bereich.

Der Rohrbund und/oder der Rohrkörper sind aus metallischem Werkstoff ausgebildet, wobei insbesondere das Innenrohr und/oder der Innenring aus verschleißfestem, insbesondere gehärtetem Stahl ausgebildet sind. Auch kann das Innenrohr aus Kunststoff ausgebildet sein. Es ist jedoch auch möglich, dass der Rohrkörper aus Verbundwerkstoff hergestellt ist. Es kann beispielsweise das Innenrohr aus Kunststoffwerkstoff hergestellt sein, mit einem Außenrohr aus Stahlwerkstoff. Auch ist es möglich, dass das Innenrohr aus einem Stahlwerkstoff hergestellt ist und das Außenrohr aus einem Kunststoffwerkstoff. Auch können sowohl Innenrohr und Außenrohr des Rohrkörpers aus Kunststoffwerkstoff hergestellt sein. Unter Kunststoffwerkstoff ist auch ein Faserverbundwerkstoff zu verstehen. Es kann jedoch auch ein einlagiger Rohrkörper auf seinen in Radialrichtung fortschreitenden Verschleiß hin überwacht werden.

Nunmehr lässt sich die erfindungsgemäße Signaleinrichtung relativ einfach herstellen. In dem Innenring, insbesondere in der Außenmantelfläche des Innenrings, beziehungsweise gerade bei vorkonfektionierten Rohrlängen in der Außenmantelfläche des Innenrohres, ist eine zumindest abschnittsweise radial umlaufende, bevorzugt radial vollständig umlaufende Nut ausgebildet. Der elektrische Leiter ist dann in der Nut selbst angeordnet. Der elektrische Leiter kann in die Nut eingeklemmt sein. Der elektrische Leiter kann jedoch auch mit einem Füllstoff, beispielsweise mit einem Klebstoff oder ähnlichem in der Nut fixiert werden.

Es hat sich als vorteilig herausgestellt, wenn ein Nutgrund der Nut einen Radius aufweist, der kleiner ist, als der Außenradius des Innenrohres. Dies ist jeweils bezogen auf eine Mittellängsachse der Feststoffförderkomponente selber. Ist so viel Innenmantelfläche abgetragen, dass der Nutgrund von innen heraus freigelegt ist, so beginnt gleichsam der in der Nut angeordnete elektrische Leiter, zu verschleißen. Insbesondere ist der elektrische Leiter aus einem Werkstoff ausgebildet, der eine geringere Festigkeit besitzt als der Werkstoff des Innenrings und/oder des Innenrohrs. Somit verschleißt der elektrische Leiter schneller als der Innenring, beziehungsweise das Innenrohr. Ist nunmehr der Radius des Nutgrundes kleiner als der Außenradius des Innenrohres, so ist bei fortschreitendem Verschleiß und Erreichen des Nutgrundes immer noch eine Restwandstärke des Innenrohres vorhanden. Der elektrische Leiter beginnt zu verschleißen und verschleißt schneller als das Innenrohr. Der Verschleiß wird somit erstmals signalisiert, wenn noch eine Restwandstärke des Innenrohres und/oder Innenrings vorhanden ist. Bevorzugt ist hierzu beispielsweise der Radius des Nutgrundes kleiner als der Außenradius des Innenrohres minus 0,1 bis 0,7, bevorzugt 0,20 bis 0,50mal die Wandstärke des Innenrohres.

Ist insbesondere der elektrische Leiter in der Nut verklebt, so wird sichergestellt, dass nicht unbeabsichtigter Weise bei Freilegen des Nutgrundes von Innen den elektrischen Leiter aufgrund einer Sogwirkung des geförderten Feststoffes herausgezogen und somit vorschnell durchtrennt wird.

In einer weiteren besonders bevorzugten Ausgestaltungsvariante ist der Außenradius des elektrischen Leiters (Abstand Außenmantelfläche des elektrischen Leiters zur Mittellängsachse der Feststoffförderkomponente) kleiner als der Außenradius des Innenrohres. Ist somit der Verschleiß soweit fortgeschritten, dass der gesamte elektrische Leiter ebenfalls verschlissen ist, ist hierdurch sichergestellt, dass immer noch eine Restwandstärke des Innenrohres vorhanden ist.

Um nunmehr den elektrischen Leiter konstruktiv in einem Zwischenraum zwischen Außenring und Innenring zu platzieren, beziehungsweise zwischen Außenrohr und Innenrohr, ist ferner vorgesehen, dass entweder die Nut an einem stirnseitigen Ende des Innenrings angeordnet ist. Somit ist die Nut selbst durch einen Stufenabsatz am stirnseitigen Ende des Innenrings im Zusammenspiel mit der Stirnfläche des Innenrohrs ausgebildet.

Die Nut kann jedoch auch von einem stirnseitigen Ende des Innenrings beabstandet sein. Um nunmehr beim Zusammenschieben von Außenring und Innenring einen Anschluss des elektrischen Leiters radial nach außen herstellen zu können, ist weiterhin vorgesehen, dass in der Außenmantelfläche des Innenrings von der Nut bis zur Stirnseite des Innenrings eine Aussparung in Axialrichtung vorhanden ist. Die freien Enden des elektrischen Leiters können somit in der Aussparung geführt werden, der Innenring in den Außenring eingeschoben werden und die freien Enden, beispielsweise durch eine Öffnung in den Außenring gezogen werden, so dass anschließend im eingebauten Zustand der elektrische Leiter in der Nut radial vollständig umlaufend angeordnet ist, wobei zwei freie Enden des elektrische Leiters in Radialrichtung nach außen durch den Außenring geführt sind, um an einer nicht näher beschriebenen Kontrolleinrichtung angeschlossen zu werden.

Da entsprechende Feststoffförderkomponenten auch an mobilen Einrichtungen, beispielsweise mobilen Betonpumpen genutzt werden, können in einer bevorzugten Ausgestaltungsvariante beispielsweise an dem Außenring zwei elektrische Kontakte ausgebildet sein, die mit dem elektrischen Leiter selbst verbunden sind. Hier kann ein vorzugsweise mobiles Prüfgerät an die elektrischen Kontakte angeschlossen werden.

Eine weitere bevorzugte Ausgestaltung der vorliegenden Erfindung sieht vor, dass zwei elektrische Leiter in der einen Nut angeordnet sind. Bevorzugt sind diese elektrischen Leiter in Radialrichtung übereinander angeordnet. Somit kann ein mehrstufiger fortschreitender Verschleiß signalisiert werden. Beispielsweise ist der erste in Radialrichtung innere elektrische Leiter verschlissen, kann dies ein Hinweis auf beispielsweise 50 % Verschleiß der Feststoffförderkomponente sein, wenn von dieser ein Signal ausgegeben wird. Ist dann der zweite in Radialrichtung außenliegende Leiter verschlissen, wäre dies eine Anzeige, dass die Verschleißgrenze der Feststoffförderkomponente erreicht ist.

Wenn der Außenring und Innenring miteinander verklebt sind oder insbesondere der Rohrbund auf den Rohrkörper aufgeklebt wird, kann gleichzeitig der elektrische Leiter zwischen Außenring und Innenring als Dichtung ausgebildet sein, nach dem Prinzip eines O-Ringes.

Weitere Vorteile, Merkmale, Eigenschaften und Aspekte der vorliegenden Erfindung sind Gegenstand der nachfolgenden Beschreibung.

Bevorzugte Ausführungsvarianten werden in schematischen Figuren dargestellt. Diese dienen dem einfachen Verständnis der Erfindung. Es zeigen:
- Figur 1: eine Teillängsschnittansicht durch ein erfindungsgemäßes Ende einer Feststoffförderkomponente,
- Figur 2: eine alternative Ausgestaltungsvariante zu Figur 1,
- Figur 3: eine alternative Ausgestaltungsvariante zu Figur 1 mit zwei in Radialrichtung übereinander angeordneten Leitern,
- Figur 4: eine Querschnittsansicht A-A aus Figur 3,
- Figur 5a und: b eine Feststoffförderkomponente in einlagiger Bauweise und
- Figur 6: eine Feststoffförderkomponente in Form eines Rohrbogens.

In den Figuren werden für gleiche oder ähnliche Bauteile dieselben Bezugszeichen verwendet, auch wenn eine wiederholte Beschreibung entfällt.

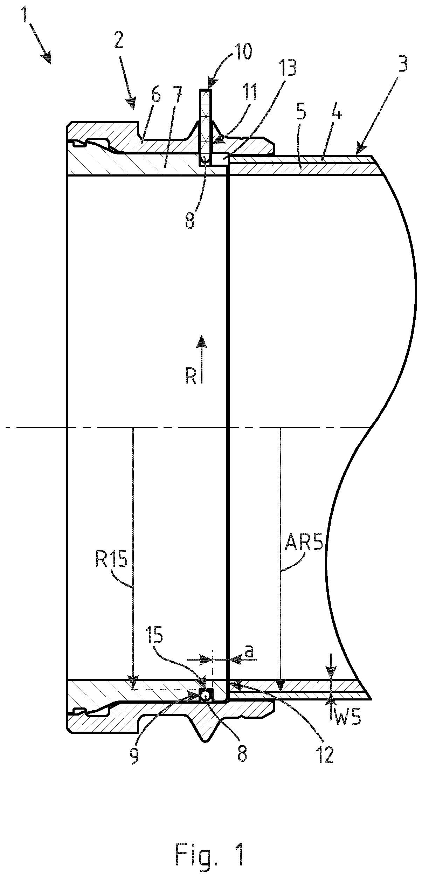

Figur 1 zeigt eine erfindungsgemäße Feststoffförderkomponente 1 als Feststoffförderrohr in einer teilweisen Längsschnittansicht. Gezeigt ist ein Endbereich mit aufgesetztem Rohrbund 2. Der Rohrkörper 3 ist aus einem Außenrohr 4 und einem Innenrohr 5 ausgebildet. Der auf das Ende des Rohrkörpers 3 aufgesetzte Rohrbund 2 ist aus einem Außenring 6 sowie Innenring 7 ausgebildet. Der Rohrbund 2 kann mit dem Rohrkörper 3 formschlüssig und/oder stoffschlüssig gekoppelt, beziehungsweise verklebt oder auch verschweißt sein.

Erfindungsgemäß ist nunmehr vorgesehen, dass ein elektrischer Leiter 8 radial umlaufend in einer Nut 9 in dem Innenring 7 angeordnet ist. Die freien Enden 10 des elektrischen Leiters 8 sind durch eine Öffnung 11 in dem Außenring 6 des Rohrbundes 2 in Radialrichtung (R) nach Außen geführt.

Von einer Stirnseite 12 des Innenrings 7 ist die Nut 9 mit einem Abstand a ausgebildet. Damit nunmehr die freien Enden 10 des elektrischen Leiters 8 während des Zusammensetzens von Innenring 7 und Außenring 6 nicht abscheren, ist eine Aussparung 13 von der Stirnseite 12 her bis zur Nut 9 vorgesehen. Durch diese Aussparung können die freien Enden 10 des Innenrings 7 zunächst durch den Außenring 6 und die Öffnung 11 des Außenrings 6 geführt werden und der Innenring 7 dann in den Außenring 6 eingesteckt werden. Die freien Enden 10 können durch die Öffnung 11 gezogen werden. Der Innenring 7 kann in den Außenring 6 formschlüssig, wie hier dargestellt, eingerastet sein, jedoch optional auch verschweißt und/oder verklebt sein.

Weiterhin dargestellt ist, dass der Radius R15 zum Nutgrund 15 kleiner ist als der Außenradius AR5 des Innenrohres 5. Der abrasive Verschleiß erreicht in dem Innenrohr 5 beziehungsweise Innenring 7 zunächst den Nutgrund 15. Dann beginnt der elektrische Leiter 8 zu verschleißen bevor das Innenrohr 5 vollständig verschlissen ist. Zudem verschleißt in der Regel der Innenring 7 schneller als das Innenrohr 5. Bevorzugt ist der Radius R15 kleiner als der Außenradius AR5 minus 0,1 bis 0,3 mal die Wandstärke W5 des Innenrohres 5.

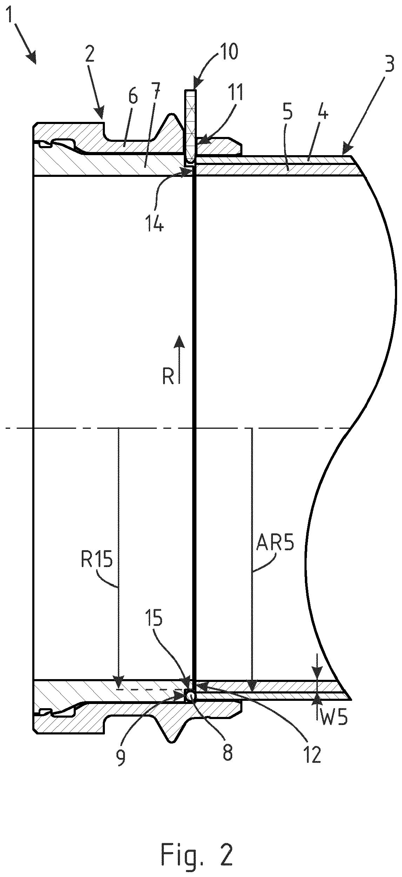

Gemäß der Ausgestaltungsvariante in Figur 2 dargestellt, ist die Nut 9 von der Stirnseite 12 des Innenrings 7 nicht beabstandet angeordnet, sondern direkt an der Stirnseite 12 ausgebildet. Die Nut 9 an dem Innenring 7 selbst ist somit als Stufenabsatz ausgebildet und kommt mit der Stirnseite 14 des Rohrkörpers 3 zur Anlage. Bei dieser Ausgestaltungsvariante kann der elektrische Leiter 8 gleichsam als Dichtung zwischen dem Innenring 7 und dem Außenring 6, beispielsweise für Klebstoff fungieren. Ferner kann die Aussparung 13 für die Montage entfallen.

Auf die Radialrichtung R bezogen, sind zwei elektrische Leiter 8.1, 8.2 übereinander angeordnet. Ist somit der erste innere elektrische Leiter 8.1 verschlissen, kann dies beispielsweise signalisieren, dass 50% des Innenrohrs 5 verschlissen sind. Ist der zweite äußere elektrische Leiter 8.2 verschlissen, beziehungsweise durchtrennt, signalisiert dies, dass die Verschleißgrenze des Innenrohres 5 erreicht ist.

Zwischen den beiden elektrischen Leitern 8.1, 8.2 kann beispielsweise eine Trennung vorgesehen sein, so dass zunächst der innere elektrische Leiter 8.1 verschleißt. Wenn dieser vollständig verschlissen ist, die Trennung verschleißt und erst dann der äußere elektrische Leiter 8.2 verschleißt.

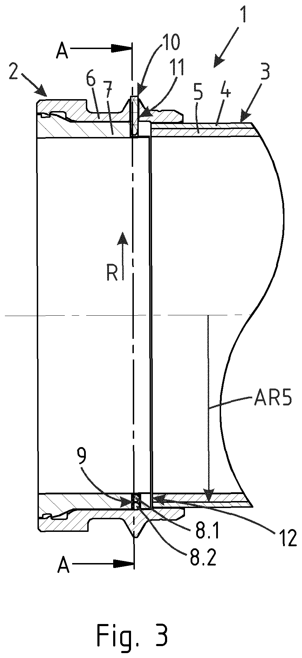

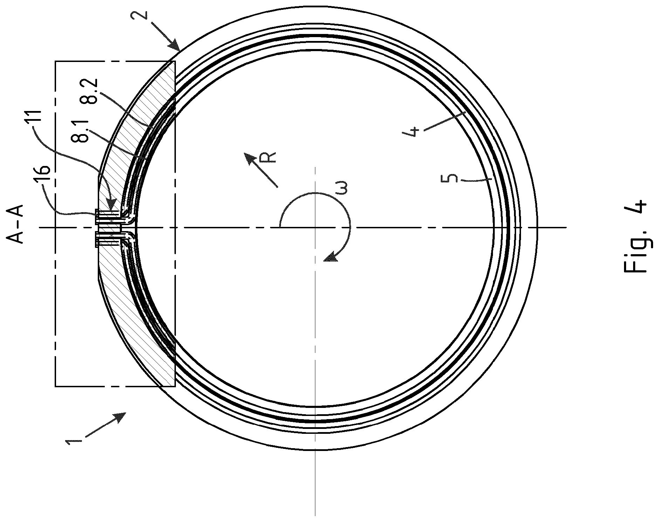

Figur 4 zeigt einen Schnitt gemäß Schnittlinie A-A von Figur 3. Die in Radialrichtung R übereinanderliegenden elektrischen Leiter 8.1, 8.2 sind radial umlaufend dargestellt. Deren freien Enden 10 sind als elektrischer Kontakt 16 ausgebildet. Hier kann beispielsweise ein nicht näher dargestelltes Messgerät angesetzt werden.

Ferner zu erkennen ist, dass die elektrischen Leiter 8.1, 8.2, hier dargestellt radial annähernd vollständig umlaufend, ausgebildet sind. Somit ist ein Winkelbereich ω von bevorzugt mehr als 350 Grad, insbesondere mehr als 355 Grad, abgedeckt. Radial umlaufend kann somit der Verschleiß gemessen werden. Der Verschleiß setzt sich in Radialrichtung R fort. Dies bietet den Vorteil, dass wenn auch nur in einem Winkelabschnitt der Verschleiß kritisch wird, in welchem ansonsten keine Verschleißanzeige gewesen wäre, hier eine sichere Anzeige des Erreichens des kritischen Verschleißzustandes erreicht wird. Im Gegensatz zu einer nur punktuellen Messung kann somit mit der vorliegenden Erfindung das Rohr radial umlaufend überwacht werden.

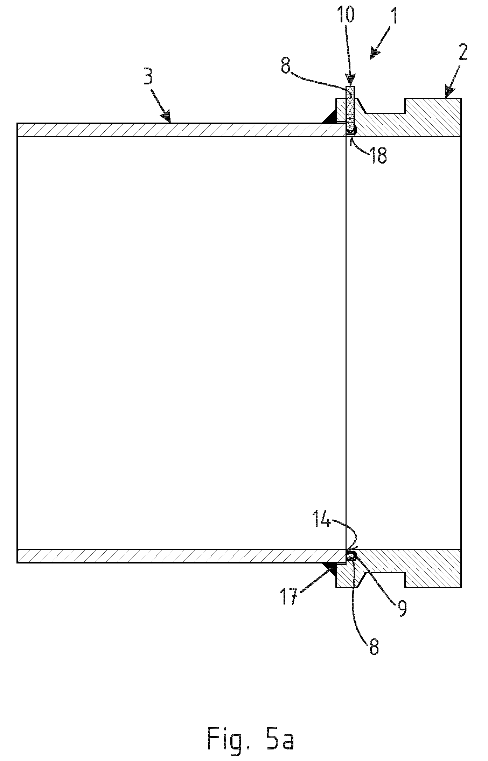

Figur 5a zeigt eine alternative Ausgestaltungsvariante einer nicht erfindungsgemäßen Feststoffförderkomponente 1. Diese ist hier auch als Feststoffförderrohr ausgebildet und weist einen Rohrkörper 3 sowie einen Rohrbund 2 auf. Im Unterschied zu den Figuren 1 bis 4 sind jedoch sowohl der Rohrkörper 3, als auch der Rohrbund 2 einlagig ausgebildet. Hier dargestellt ist stirnseitig eine Nut 9 in den Rohrbund 2 eingefräst und ein elektrischer Leiter 8 eingesetzt. Im Anschluss daran ist die Stirnseite 12 des Rohrkörpers 3 an den Rohrbund 2 angesetzt, beziehungsweise hier teilweise in den Rohrbund 2 eingeschoben. Der Rohrbund 2 und der Rohrkörper 3 sind sodann über eine Kehlnaht 17 miteinander gekoppelt.

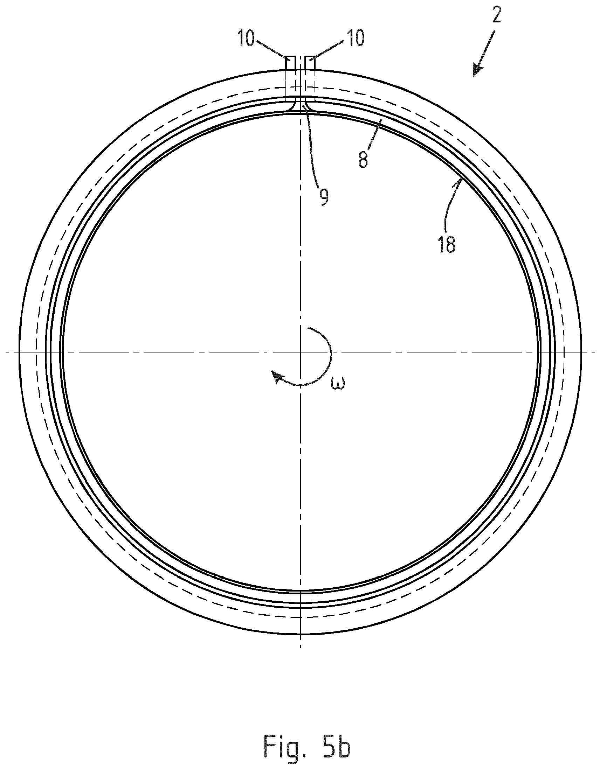

Figur 5b zeigt eine Stirnansicht auf den Rohrbund 2, ohne eingesteckten Rohrkörper 3. Zu erkennen ist auch hier, dass der elektrische Leiter 8 über einen radial umlaufenden Winkelbereich ω von mehr als 350°, annähernd 360° umlaufend eingesetzt ist. Die zwei Enden 10 des elektrischen Leiters 8, 8.1, 8.2 sind durch eine Öffnung 11 in dem Rohrbund 2 nach außen geführt. Mit Verweis auf Figur 5a ist bei Erreichen eines abrasiven Verschleißes der Innenmantelfläche 18 des Rohrbundes 2 der elektrische Leiter 8 freigelegt und würde ebenfalls verschleißen.

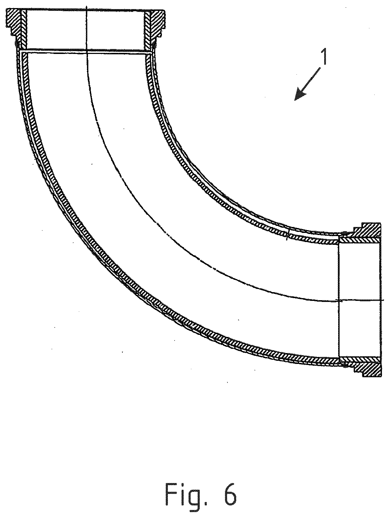

Figur 6 zeigt eine Feststoffförderkomponente 1 in Form eines Rohrbogens. Hier wird eine gekrümmte Rohrkomponente gezeigt, die ebenfalls jeweils endseitig mit einem Rohrbund 2 gekoppelt ist. Auch hier kann die erfindungsgemäße Verschleißanzeige eingesetzt sein.

### Bezugszeichen:

- 1: - Feststoffförderkomponente
- 2: - Rohrbund
- 3: - Rohrkörper
- 4: - Außenrohr
- 5: - Innenrohr
- 6: - Außenring zu 2
- 7: - Innenring zu 2
- 8: - elektrische Leiter
- 8.1: - elektrische Leiter
- 8.2: - elektrische Leiter
- 9: - Nut
- 10: - Freies Ende
- 11: - Öffnung
- 12: - Stirnseite zu 7
- 13: - Aussparung
- 14: - Stirnseite zu 3
- 15: - Nutgrund
- 16: - Elektrischer Kontakt
- 17: - Kehlnaht
- 18: - Innenmantelfläche zu 2

- a: - Abstand
- R: - Radialrichtung
- AR5: - Außenradius zu 5
- R15: - Radius zu 15
- ω: - Winkelabschnitt
- W5: - Wandstärke zu 5

## Patentansprüche

1. Feststoffförderkomponente (1), aufweisend eine Rohrkomponente und einen damit gekoppelten Rohrbund (2), wobei die Feststoffförderkomponente (1) eine Verschleißanzeige aufweist, und in dem Rohrbund (2) und/oder in der Rohrkomponente ein radial zumindest teilweise umlaufender elektrischer Leiter (8, 8.1, 8.2) angeordnet ist, dergestalt, dass bei fortschreitendem abrasivem Verschleiß der Feststoffförderkomponente (1) der elektrische Leiter (8, 8.1, 8.2) beschädigt, insbesondere durchtrennt wird, wobei die Rohrkomponente zweilagig ausgebildet und/oder dass der Rohrbund (2) zweilagig mit einem Innenring (7) und einem Außenring (6) ausgebildet ist, **dadurch gekennzeichnet, dass** in der Rohrkomponente und/oder in dem Rohrbund (2) eine radial zumindest teilweise umlaufende Nut (9) ausgebildet ist, wobei in der Nut (9) der elektrische Leiter (8, 8.1, 8.2) angeordnet ist.

2. Feststoffförderkomponente (1) nach Anspruch 1, **dadurch gekennzeichnet, dass** die Rohrkomponente ein Rohrkörper (3) oder ein Rohrbogen oder eine Rohrmuffe ist..

3. Feststoffförderkomponente (1) nach Anspruch 1 oder 2, **dadurch gekennzeichnet, dass** in dem Innenring (7), insbesondere in der Außenmantelfläche des Innenringes (7) eine radial zumindest teilweise umlaufende Nut (9) ausgebildet ist.

4. Feststoffförderkomponente (1) nach einem der Ansprüche 1 bis 3, **dadurch gekennzeichnet, dass** die Nut (9) an einem stirnseitigen Ende des Innenringes (7) ausgebildet ist oder dass die Nut (9) von einem stirnseitigen Ende (14) des Innenringes (7) beabstandet ist.

5. Feststoffförderkomponente (1) nach einem der Ansprüche 1 bis 4, **dadurch gekennzeichnet, dass** ein Radius eines Nutgrundes (15) kleiner ist als ein Außenradius des Innenrohres (5), vorzugsweise ist ein Außenradius des elektrischen Leiters (8, 8.1, 8.2) kleiner als ein Außenradius des Innenrohres (5).

6. Feststoffförderkomponente (1) nach Anspruch 1, **dadurch gekennzeichnet, dass** in der Außenmantelfläche des Innenringes (7) von der Nut (9) bis zur Stirnseite (12) eine Aussparung (13) vorhanden ist.

7. Feststoffförderkomponente (1) nach einem der Ansprüche 1 bis 6, **dadurch gekennzeichnet, dass** der elektrische Leiter (8, 8.1, 8.2) in der Nut (9) eingeklebt ist und/oder formschlüssig in der Nut (9) befestigt ist.

8. Feststoffförderkomponente (1) nach einem der Ansprüche 1 bis 7, **dadurch gekennzeichnet, dass** mindestens ein Ende (10), bevorzugt beide Enden (10) des elektrischen Leiters (8, 8.1, 8.2) in Radialrichtung nach außen geführt sind.

9. Feststoffförderkomponente (1) nach einem der Ansprüche 1 bis 8, **dadurch gekennzeichnet, dass** an dem Außenring (6) zwei elektrische Kontakte (16) ausgebildet sind, die mit dem elektrischen Leiter (8, 8.1, 8.2) verbunden sind.

10. Feststoffförderkomponente (1) nach einem der Ansprüche 1 bis 9, **dadurch gekennzeichnet, dass** zwei elektrische Leiter (8.1, 8.2) in der Nut (9) angeordnet sind, bevorzugt in Radialrichtung übereinander.

11. Feststoffförderkomponente (1) nach einem der Ansprüche 1 bis 10, **dadurch gekennzeichnet, dass** der elektrische Leiter (8, 8.1, 8.2) als Coaxialleiter ausgebildet ist, aufweisend einen inneren elektrischen Leiter und eine diesen umgreifende Isolierung.

12. Feststoffförderkomponente (1) nach einem der Ansprüche 1 bis 11, **dadurch gekennzeichnet, dass** der elektrische Leiter (8, 8.1, 8.2) zwischen Außenring (6) und Innenring (7) als Isolierung ausgebildet ist.

## Claims

1. Solid feed component (1) having a pipe component and a pipe collar (2) coupled therewith, wherein the solid feed component (1) has a wear indicator, and a radially at least partially circumferential electrical conductor (8, 8.1, 8.2) is arranged to the pipe collar (2) and/or in the pipe component such that in the case of advancing abrasive wear of the solid feed component (1) the electrical conductor (8, 8.1, 8.2) is damaged, in particular severed, wherein the pipe component is double-layered in design and/or that the pipe collar (2) is double-layered in design having an inner ring (7) and an outer ring (6), **characterised in that** in the pipe component and/or in the pipe collar (2) is arranged a radially at least partially circumferential groove (9), wherein the electrical conductor (8, 8.1, 8.2) is arranged in the groove (9).

2. Solid feed component (1) according to claim 1, **characterised in that** the pipe component is a pipe body (3) or a pipe bend or a pipe sleeve.

3. Solid feed component (1) according to claim 1 or 2, **characterised in that** a radially at least partially circumferential groove (9) is formed in the inner ring (7), in particular in the outer shell surface of the inner ring (7).

4. Solid feed component (1) according to any of claims 1 to 3, **characterised in that** the groove (9) is formed on a front-side end of the inner ring (7) or that the groove (9) is spaced from a front-side end (14) of the inner ring (7).

5. Solid feed component (1) according to any of claims 1 to 4, **characterised in that** a radius of a groove base (15) is smaller than an outer radius of the inner pipe (5), preferably, an outer radius of the electrical conductor (8, 8.1, 8.2) is smaller than an outer radius of the inner pipe (5).

6. Solid feed component (1) according to claim 1, **characterised in that** a cutout (13) is present in the outer shell surface of the inner ring (7) from the groove (9) until the end face (12).

7. Solid feed component (1) according to any of claims 1 to 6, **characterised in that** the electrical conductor (8, 8.1, 8.2) is adhesively bonded in the groove (9) and/or is fastened in a form-fitting manner in the groove (9).

8. Solid feed component (1) according to any of claims 1 to 7, **characterised in that** at least one end (10), preferably both ends (10) of the electrical conductor (8, 8.1, 8.2) are guided to the outside in radial direction.

9. Solid feed component (1) according to any of claims 1 to 8, **characterised in that** on the outer ring (6) are formed two electrical contacts (16) which are connected with the electrical conductor (8, 8.1, 8.2).

10. Solid feed component (1) according to any of claims 1 to 9, **characterised in that** two electrical conductors (8.1, 8.2) are arranged in the groove (9), preferably in radial direction above one another

11. Solid feed component (1) according to any of claims 1 to 10, **characterised in that** the electrical conductor (8, 8.1, 8.2) is in the form of a coaxial conductor, having an inner electrical conductor and an insulation surrounding this.

12. Solid feed component (1) according to any of claims 1 to 11, **characterised in that** the electrical conductor (8, 8.1, 8.2) is formed as an insulation between outer ring (6) and inner ring (7).

## Revendications

1. Composant de transport de matière solide (1), présentant un composant de tube et un collier de tube (2) couplé avec celui-ci, dans lequel le composant de transport de matière solide (1) présente un indicateur d'usure, et un conducteur électrique radialement au moins partiellement circonférentiel (8, 8.1, 8.2) est agencé au niveau du collier de tube (2) et/ou dans le composant de tube, de telle manière que le conducteur électrique (8, 8.1, 8.2) est endommagé par l'usure abrasive progressive du composant de transport de matière solide (1), en particulier est séparé, dans lequel le composant de tube est réalisé en deux couches et/ou en ce que le collier de tube (2) est réalisé en deux couches avec une bague intérieure (7) et une bague extérieure (6), **caractérisé en ce qu'**une rainure radiale au moins partiellement circonférentielle (9) est réalisée dans le composant de tube et/ou dans le collier de tube (2), dans lequel le conducteur électrique (8, 8.1, 8.2) est agencé dans la rainure (9).

2. Composant de transport de matière solide (1) selon la revendication 1, **caractérisé en ce que** composant de tube est un corps de tube (3) ou un coude de tube ou un manchon de tube.

3. Composant de transport de matière solide (1) selon la revendication 1 ou 2, **caractérisé en ce qu'**une rainure (9) radiale au moins partiellement circonférentielle est réalisée dans la bague intérieure (7), en particulier dans la surface enveloppe extérieure de la bague intérieure (7).

4. Composant de transport de matière solide (1) selon l'une quelconque des revendications 1 à 3, **caractérisé en ce que** la rainure (9) est réalisée à une extrémité frontale de la bague intérieure (7) ou **en ce que** la rainure (9) est espacée d'une extrémité frontale (14) de la bague intérieure (7).

5. Composant de transport de matière solide (1) selon l'une quelconque des revendications 1 à 4, **caractérisé en ce qu'**un rayon d'un fond de rainure (15) est inférieur à un rayon extérieur du tube intérieur (5), de préférence est un rayon extérieur du conducteur électrique (8, 8.1, 8.2) inférieur à un rayon extérieur du tube intérieur (5).

6. Composant de transport de matière solide (1) selon la revendication 1, **caractérisé en ce qu'**un évidement (13) est prévu dans la surface enveloppe extérieure de la bague intérieure (7) de la rainure (9) jusqu'à la face frontale (12).

7. Composant de transport de matière solide (1) selon l'une quelconque des revendications 1 à 6, **caractérisé en ce que** le conducteur électrique (8, 8.1, 8.2) est collé dans la rainure (9) et/ou est fixé par complémentarité de forme dans la rainure (9).

8. Composant de transport de matière solide (1) selon l'une quelconque des revendications 1 à 7, **caractérisé en ce qu'**au moins une extrémité (10), de préférence les deux extrémités (10), du conducteur électrique (8, 8.1, 8.2) est guidée vers l'extérieur dans le sens radial.

9. Composant de transport de matière solide (1) selon l'une quelconque des revendications 1 à 8, **caractérisé en ce que** deux contacts électriques (16) sont réalisés au niveau de la bague extérieure (6), lesquels sont reliés avec le conducteur électrique (8, 8.1, 8.2).

10. Composant de transport de matière solide (1) selon l'une quelconque des revendications 1 à 9, **caractérisé en ce que** deux conducteurs électriques (8.1, 8.2) sont agencés dans la rainure (9), de préférence l'un au-dessus de l'autre dans le sens radial.

11. Composant de transport de matière solide (1) selon l'une quelconque des revendications 1 à 10, **caractérisé en ce que** le conducteur électrique (8, 8.1, 8.2) est réalisé comme un conducteur coaxial, présentant un conducteur électrique interne et une isolation qui l'entoure.

12. Composant de transport de matière solide (1) selon l'une quelconque des revendications 1 à 11, **caractérisé en ce que** le conducteur électrique (8, 8.1, 8.2) entre l'anneau extérieur (6) et l'anneau intérieur (7) est réalisé comme un isolant.
